# FASCICULE DE BREVET EUROPEEN

(11) **EP 1 564 053 B1**
(45) Date de publication et mention de la délivrance du brevet: **10.12.2008**
(21) Numéro de dépôt: 05290155.0
(22) Date de dépôt: 24.01.2005
(51) Int. Cl.: B60J 7/20, B60J 7/057

(54) **Toit rigide escamotable pour véhicule automobile**
Faltbares Hardtop für Fahrzeug
Foldable hardtop for vehicle

(30) Priorité: 16.02.2004 FR 0401538
(43) Date de publication de la demande: 17.08.2005
(73) Titulaire: Peugeot Citroën Automobiles S.A., 78140 Vélizy Villacoublay (FR)
(72) Inventeur: Guinois, Pascal, 91680 Bruyeres le Chatel (FR)
(74) Mandataire: Thinat, Michel

(56) Documents cités:
- EP-A- 0 835 778
- EP-A- 0 884 208
- DE-A- 10 060 404
- DE-A- 10 149 456
- US-A1- 2003 025 349
- US-A1- 2004 007 897

## Description

L'invention concerne un toit rigide escamotable équipant un véhicule automobile comprenant un coffre arrière, ce toit incluant un pavillon couvrant l'habitacle lorsque le toit est déployé, ce toit pouvant être escamoté en partie supérieure du coffre arrière du véhicule pour découvrir l'habitacle.

L'invention porte plus particulièrement sur un toit pour véhicule décapotable à deux ou quatre places, l'escamotage et le déploiement de ce toit étant assurés par un ensemble d'actionneurs tels que des vérins et/ou des moteurs électriques.

Un tel toit qui est conçu par la société Heuliez-France Design est décrit dans la revue Auto Concept magazine n°41, janvier/février 2002/2003 pages 36 à 42, voir préambule de la revendication 1. Ce toit comprend un pavillon, une lunette arrière, et deux montants latéraux situés de part et d'autre de la lunette arrière. Lorsque le toit est déployé, la lunette arrière et les deux montants s'étendent sensiblement selon un plan incliné dans le prolongement de l'arrière du pavillon qui couvre l'habitacle. La lunette arrière est fixée aux montants latéraux sensiblement à mi-longueur de ceux-ci, par deux liaisons pivot lui permettant de tourner selon un axe horizontal. Chaque montant latéral a son extrémité supérieure fixée au pavillon par une articulation et son extrémité inférieure fixée au véhicule par une autre articulation. Ces montants peuvent ainsi pivoter dans un plan vertical suivant la direction longitudinale du véhicule depuis l'habitacle vers le coffre arrière. Ce coffre arrière a une forme sensiblement parallélépipédique, un hayon étant prévu pour recouvrir la face arrière et la partie supérieure du parallélépipède qu'il forme.

Lorsque l'escamotage du toit est commandé, le hayon s'ouvre en basculant vers l'arrière pour recevoir le toit à l'intérieur du coffre arrière. Chaque montant latéral pivote ensuite pour ramener le pavillon vers la partie supérieure du coffre en le maintenant sensiblement parallèle à lui-même. La rotation des montants latéraux produit le déplacement de la lunette arrière qui tourne autour des liaisons pivot pour se positionner sensiblement parallèlement au pavillon, dessous ce dernier. Après cette étape, le haillon se referme sur le coffre arrière contenant le toit replié.

Ce toit occupe un volume important lorsqu'il est escamoté à l'intérieur du coffre arrière, qui réduit significativement le volume utile du coffre arrière. D'autre part l'adaptation de ce toit qui est principalement conçu pour un véhicule à deux places, au cas d'un véhicule à quatre places ayant un pavillon de plus grandes dimensions nécessite d'augmenter significativement les dimensions du coffre arrière pour qu'il puisse accueillir le pavillon.

Le toit décrit dans le document EP0884208 s'escamote au niveau d'un compartiment situé entre le coffre arrière et les sièges avant du véhicule, de sorte que le volume utile du coffre n'est pas pénalisé par le repli du toit.

Cette architecture nécessite de disposer d'un espace suffisant pour le compartiment dédié, ce qui est adapté seulement au cas d'un coupé à deux place, mais n'est pas envisageable avec d'autres types de véhicules.

Le but de l'invention est de remédier à ces inconvénients en proposant une architecture de toit escamotable présentant un volume réduit lorsqu'il est escamoté.

A cet effet, l'invention a pour objet un toit rigide escamotable équipant un véhicule automobile comprenant un coffre arrière, ce toit incluant un pavillon couvrant l'habitacle et une lunette arrière inclinée couvrant le coffre arrière en prolongeant le pavillon jusqu'à un bord supérieur arrière du coffre arrière lorsque ce toit est déployé, ce toit pouvant être escamoté en partie supérieure du coffre arrière pour découvrir l'habitacle, la lunette arrière étant alors escamotée horizontalement dans le coffre arrière et la partie supérieure du coffre arrière étant alors fermée par un couvercle formé par tout ou partie du pavillon.

Le volume occupé par le toit replié à l'intérieur du coffre arrière est réduit du fait qu'au moins une partie du pavillon n'a pas à loger à l'intérieur du coffre arrière puisqu'elle couvre celui-ci. D'autre part, il n'est plus nécessaire de prévoir un haillon s'ouvrant et se fermant automatiquement avant et après l'escamotage du toit, ce qui simplifie la conception générale et réduit significativement le temps d'escamotage et de déploiement.

Avantageusement, le toit comprend une lunette arrière apte à occuper une position inclinée pour couvrir le coffre arrière lorsque le pavillon couvre l'habitacle en prolongeant le pavillon jusqu'à un bord supérieur arrière du coffre arrière, et une position horizontale dans laquelle elle est escamotée dans le coffre arrière, cette lunette arrière étant montée pivotante par rapport au bord supérieur arrière du coffre arrière. La lunette arrière peut ainsi être abaissée alors que le pavillon couvre l'habitacle pour obtenir une ventilation importante de l'intérieur de l'habitacle.

Dans un mode de réalisation particulier, le pavillon est formé par un demi-pavillon avant et un demi-pavillon arrière disposés dans le prolongement l'un de l'autre lorsque le toit est déployé, et disposés l'un au dessus de l'autre lorsque le toit est escamoté, le couvercle du coffre arrière étant formé par l'un de ces demi-pavillons lorsque le toit est escamoté. Ce mode de réalisation est adapté aux véhicules à quatre places, et permet d'escamoter un pavillon de grande taille sans avoir à augmenter les dimensions du coffre arrière. Avantageusement, un parallélogramme déformable incluant deux biellettes relie le demi-pavillon avant au demi-pavillon arrière, l'une de ces biellettes étant prolongée par un galet ou un patin glissant qui coulisse dans un rail sensiblement vertical pour faire pivoter le parallélogramme déformable lorsque le toit s'escamote afin de faire passer le demi-pavillon avant par dessus le demi-pavillon arrière. Il n'est ainsi pas nécessaire de prévoir des actionneurs supplémentaires pour le mouvement du demi-pavillon avant.

Avantageusement, le toit comprend deux custodes situées sensiblement verticalement de part et d'autre de la lunette arrière, chaque custode comprenant deux rails recevant respectivement deux galets ou patins glissants solidaires du pavillon, le pavillon étant guidé par ces rails durant l'escamotage du toit. Ces custodes peuvent être montées rotatives par rapport à un bord supérieur arrière du coffre arrière, chaque custode occupant une position haute lorsque le toit est déployé et pouvant être abaissée dans le coffre arrière lorsque le toit est escamoté. Le couvercle du coffre arrière peut ainsi être abaissé à l'horizontale lorsque le toit est escamoté, ce qui améliore l'esthétique et l'aérodynamique du véhicule.

Le déplacement d'une custode peut être assuré par une articulation à dépassement de centre incluant deux biellettes articulées l'une par rapport à l'autre, cette articulation reliant un point d'ancrage fixe du véhicule à une partie avant de la custode et étant actionnée par un vérin. Cette articulation assure un positionnement stable et précis de chaque custode en position haute. Un système analogue peut être prévu pour la lunette arrière.

L'invention sera maintenant décrite plus en détail, et en référence aux dessins annexés qui en illustrent une forme de réalisation à titre d'exemple non limitatif.
- La figure 1 est une vue d'ensemble du toit selon l'invention en position déployée ;
- La figure 2 est une vue du toit selon l'invention durant une première étape d'escamotage ;
- La figure 3 est une vue du toit selon l'invention durant une seconde étape d'escamotage ;
- La figure 4 est une vue du toit selon l'invention durant une troisième étape d'escamotage ;
- La figure 5 est une vue du toit selon l'invention durant une quatrième étape d'escamotage ;
- La figure 6 est une vue du toit selon l'invention en position escamotée ;
- La figure 7 est une première vue du parallélogramme reliant le demi-pavillon avant au demi-pavillon arrière ;
- La figure 8 est une seconde vue du parallélogramme reliant le demi-pavillon avant au demi-pavillon arrière.

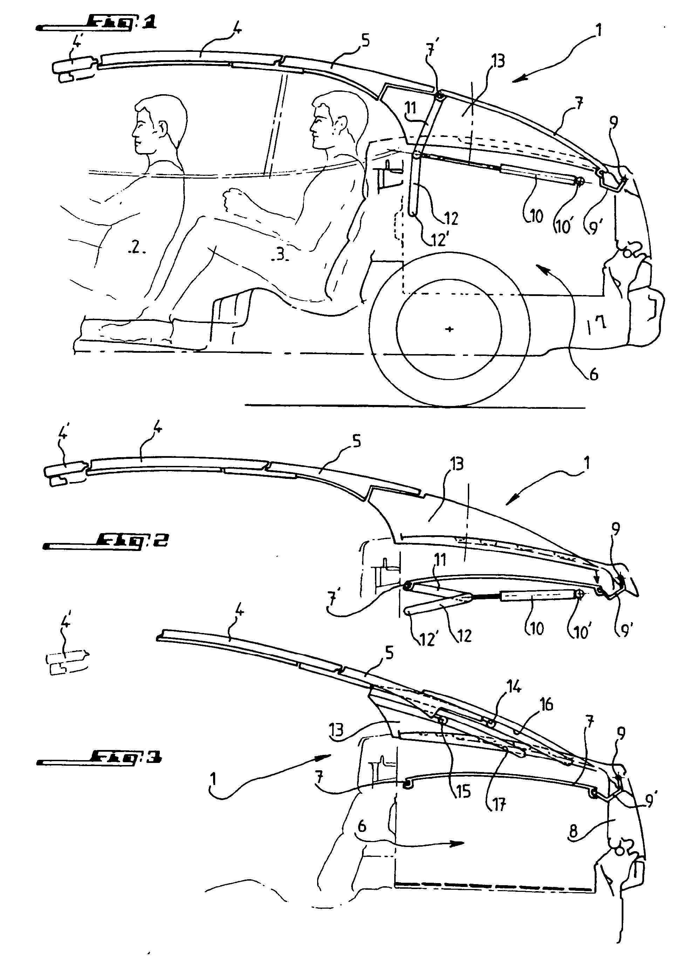

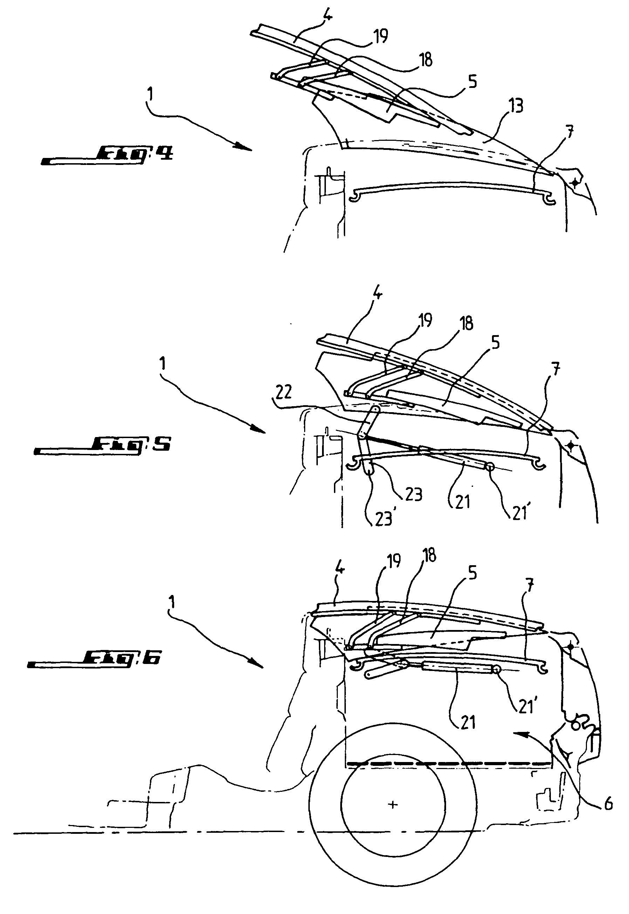

Figure 1, un véhicule 1 de type cabriolet à quatre places est représenté de profil, avec un passager avant et un passager arrière repérés respectivement par les références 2 et 3. Ce véhicule est équipé d'un toit rigide escamotable incluant un pavillon qui couvre l'habitacle sur la figure 1 et qui est escamoté en partie supérieure du coffre arrière 6 sur la figure 6. Ce pavillon qui a un contour sensiblement rectangulaire est ici formé par un demi-pavillon avant 4 et un demi-pavillon arrière 5 qui ont également des contours sensiblement rectangulaires. Ces demi-pavillons sont disposés dans le prolongement l'un de l'autre lorsque le toit est déployé comme sur la figure 1, le demi-pavillon avant 4 ayant son bord avant fixé à une attache 4' située sensiblement dans le prolongement du pare-brise du véhicule. Ils sont disposés l'un au dessus de l'autre lorsque le toit est escamoté, comme sur la figure 6. L'escamotage du toit se réalise selon une cinématique dont les étapes successives qui sont représentées sur les figures 1 à 6 seront détaillées plus bas. Le coffre arrière 6 du véhicule 1 a une forme sensiblement parallélépipédique avec deux flancs s'étendant parallèlement aux roues arrières du véhicule, sa partie supérieure étant conçue pour recevoir le toit replié, un portillon 8 constituant la face arrière de ce coffre arrière. Ce portillon qui est vertical en position fermée peut pivoter autour d'un bord supérieur arrière 9 du coffre arrière 6 pour être ouvert et permettre l'accès à l'intérieur de ce coffre arrière.

Selon l'invention, la partie supérieure du coffre arrière 6 est fermée par un couvercle qui est formé par tout ou partie du pavillon 4, 5 lorsque le toit est escamoté, comme visible figure 6. Le volume du toit escamoté s'en trouve réduit puisqu'une partie -voire la totalité- du pavillon couvre le coffre au lieu d'être logée à l'intérieur de celui-ci. D'autre part, il n'est plus nécessaire de prévoir un hayon muni d'actionneurs gérant son ouverture et sa fermeture, ce qui simplifie la conception générale et réduit le temps d'escamotage et de déploiement du toit.

Le pavillon représenté dans les figures est un pavillon de grande taille correspondant à un véhicule à quatre places, ce pavillon étant réalisé en deux parties 4 et 5 de manière à permettre son escamotage en partie supérieure du coffre arrière 6. Dans le cas d'un véhicule de type coupé avec un pavillon de plus faibles dimensions réalisé en une seule partie, la partie supérieure du coffre arrière 6 peut avantageusement être couverte par la totalité du pavillon pour réduire encore l'encombrement du toit à l'intérieur du coffre arrière.

Lorsque le toit est déployé, la partie supérieure du coffre arrière 6 peut être couverte par une lunette arrière 7 escamotable. Comme représenté figure 1, cette lunette arrière 7 peut occuper une position inclinée pour couvrir le coffre arrière 6 lorsque le pavillon 4, 5 couvre l'habitacle, en prolongeant le pavillon 4, 5 jusqu'au bord supérieur arrière 9 du coffre arrière 6. Lorsqu'elle est escamotée, la lunette arrière 7 occupe une position horizontale dans laquelle elle est abaissée dans le coffre arrière 6, comme visible dans les figures 2 à 6. Cette lunette arrière 7 est montée pivotante par rapport au bord supérieur arrière 9 du coffre arrière 6 de manière à pouvoir être abaissée depuis la position inclinée vers la position horizontale en déplaçant sa partie avant 7'. Comme visible dans les figures 1 à 6, l'articulation de la lunette arrière 7 sur le bord supérieur 9 du coffre est réalisée avec une pièce intermédiaire 9' qui a une extrémité articulée sur le bord 9 et son autre extrémité articulée sur la lunette arrière 7. Cette pièce intermédiaire 9' est dans le prolongement de la lunette arrière 7 lorsque celle-ci occupe sa position inclinée et forme au contraire un angle avec la lunette arrière 7 lorsque celle-ci est en position horizontale. Cette pièce intermédiaire 9' contribue à abaisser l'ensemble de la lunette arrière 7 au dessous du bord supérieur 9 pour libérer la partie supérieur du coffre et permettre ainsi d'accueillir le toit replié. De façon plus générale, la lunette arrière 7 peut être ouverte en étant escamotée dans le coffre arrière par abaissement de son bord avant, et elle est fermée en remontant ce bord avant jusqu'à ce qu'il devienne jointif du bord arrière du pavillon 4, 5, comme représenté figure 1. Il est ainsi possible de rouler avec le pavillon couvrant l'habitacle tout en ayant la lunette arrière ouverte pour obtenir une ventilation importante de l'habitacle du véhicule.

Le déplacement du bord avant de la lunette arrière 7 peut être réalisé au moyen d'un vérin électrique 10. Avantageusement, ce vérin 10 coopère avec une articulation à dépassement de centre telle que celle qui est représentée sur les figures 1 et 2. Cette articulation est en dépassement de centre lorsque la lunette arrière 7 est en position inclinée de manière à assurer un positionnement stable et précis de cette lunette arrière 7. Cette articulation qui comprend deux biellettes 11 et 12 articulées l'une par rapport à l'autre relie un point d'ancrage fixe 12' du véhicule 1 à la partie avant 7' de la lunette arrière 7. Le vérin 10 coopère avec cette articulation pour déplacer la lunette arrière 7 entre sa position inclinée et sa position horizontale. Le vérin 10 et les biellettes 11 et 12 sont disposés dans un plan vertical, le long d'un flanc du coffre arrière.

Plus particulièrement, le vérin 10 comprend une extrémité fixe montée pivotante par rapport à un point d'ancrage fixe 10' situé dans une zone arrière supérieure du flanc du coffre arrière 6. Il comprend une extrémité mobile 10" fixée rotativement à une extrémité de chacune des biellettes 11 et 12. Les deux autres extrémités des biellettes 11 et 12 sont fixées respectivement à la partie avant 7' de la lunette arrière 7, et à un autre point d'ancrage 12' situé dans une zone inférieure avant du flanc du coffre arrière 6. L'allongement du vérin 10 permet de modifier la longueur séparant les extrémités des biellettes 11 et 12. Lorsque la lunette arrière est inclinée avec sa partie avant en position haute, le vérin 10 est allongé, pour définir avec les biellettes 11 et 12 la forme de la lettre T disposée horizontalement. Lorsque la lunette arrière 7 est escamotée avec son bord avant en position basse, le vérin 10 est rétracté et décrit avec les biellettes 11 et 12 la forme de la lettre Y disposée horizontalement. Pour mener la partie avant de la lunette arrière en position haute, l'extrémité libre du vérin dépasse un axe passant par la partie avant 7' de la lunette arrière 7 et par le point d'ancrage 12' de la biellette 12. Dans cette position, un abaissement non commandé par le vérin conduirait à un allongement de ce dernier alors qu'il est déjà à son allongement maximal. Une buttée pourra être prévue pour limiter l'allongement maximal du vérin 10.

Le mouvement du pavillon pendant que le toit est escamoté pourra par exemple être guidé par deux custodes 13 prolongeant les flancs du coffre arrière vers le haut. Chaque custode 13 a un contour sensiblement triangulaire dont le bord supérieur définit une inclinaison correspondant à l'inclinaison de la lunette arrière lorsqu'elle est en position haute. Ces deux custodes sont disposées de part et d'autre de la lunette arrière 7 et sont notamment conçues pour guider le mouvement du pavillon depuis l'habitacle vers la partie supérieure du coffre arrière 6.

Lorsque l'escamotage du toit est commandé, la lunette arrière 7 descend dans le coffre arrière 6 pour occuper la position de la figure 2. Le demi-pavillon arrière 5 est ensuite déplacé vers la partie supérieure du coffre arrière 6 par un actionneur non représenté en étant guidé par les custodes 13. Plus particulièrement, le demi-pavillon 5 comprend deux galets 14 et 15 ou patins glissants en regard de chaque custode 13. Ces galets coulissent dans des rails correspondants 16 et 17 réalisés dans les custodes 13, et représentés figure 3. Les rails 16 et 17 s'étendent de façon sensiblement parallèle au bord supérieur de la custode 13. Les galets 14 et 15 qui sont situés au niveau du bord arrière du demi-pavillon 5 sont en permanence engagés dans les rails 16 et 17, y compris lorsque le toit est déployé. Ces rails guident le mouvement du demi-pavillon 5 durant son mouvement vers le coffre arrière 6 ce qui correspond aux figures 3 à 5.

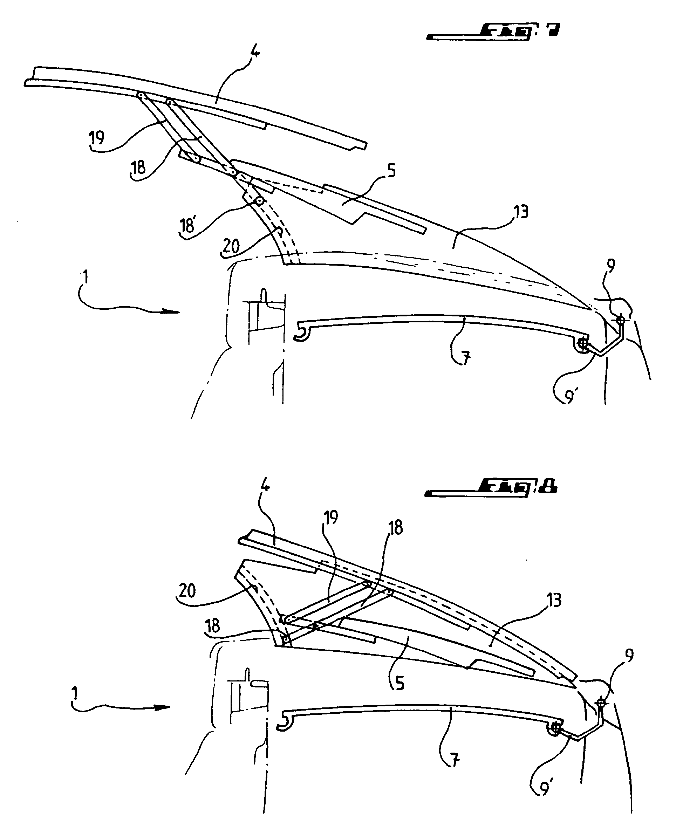

Le déplacement du demi-pavillon avant 4 pourra par exemple être réalisé grâce à des actionneurs électriques tels que des vérins ou moteurs électriques non représentés. Avantageusement, un parallélogramme déformable incluant deux biellettes 18 et 19 relie le demi-pavillon avant au demi pavillon arrière, la biellette 18 étant prolongée par un galet ou patin glissant 18' qui coulisse dans un rail 20 sensiblement vertical. Lorsque le toit est déployé comme dans les figures 1 et 2, les biellettes 18 et 19 sont sensiblement superposées l'une à l'autre, le galet 18' étant situé en partie supérieure du rail vertical 20. Lorsque le demi-pavillon arrière est tiré vers la partie supérieure du coffre arrière 6, le galet 18' descend dans le rail vertical 20, ce qui provoque une rotation des biellettes 18 et 19 pour provoquer le passage du demi-pavillon avant 4 par dessus le demi-pavillon arrière 5, comme représenté sur les figures 7 à 8. Plus particulièrement, en fin de déplacement, le demi-pavillon avant 4 couvre la partie supérieure du coffre arrière 6 en étant placé au dessus du demi-pavillon avant pour occuper la position qu'occupe la lunette arrière 7 lorsqu'elle est en position haute. Le parallélogramme avec le galet 18' forme ainsi un pantographe grâce auquel il n'est pas nécessaire de prévoir des actionneurs dédiés au demi-pavillon avant 4 , ce qui permet de réduire le coût du toit selon l'invention. Le rail vertical 20 peut avantageusement être réalisé dans la custode 13, comme visible sur les figures 7 et 8, mais il pourrait aussi être réalisé dans un montant vertical du véhicule.

Avantageusement, les custodes 13 sont montées rotatives par rapport au bord supérieur arrière 9 du coffre arrière 6, de manière à pouvoir basculer dans le coffre arrière 6. Le basculement des custodes 13 entraîne celui des deux demi-pavillons 4 et 5 qui sont fixés à ces custodes, pour atteindre une position représentée figure 6, dans laquelle le demi-pavillon 4 est sensiblement horizontal. Le toit escamoté devient ainsi horizontal pour améliorer l'esthétique et l'aérodynamique du véhicule.

L'asservissement du mouvement d'une custode 13 peut être réalisé de manière analogue à celui de la lunette arrière 7, en recourant à une articulation à dépassement de centre coopérant avec un vérin 21 représentés sur les figures 5 et 6. Cette autre articulation à dépassement de centre comprend également deux biellettes 22 et 23 articulées l'une par rapport à l'autre, et elle relie un point d'ancrage fixe 23' du véhicule 1 à une partie avant d'une custode 13. Le vérin 21 coopère avec cette articulation en ayant son extrémité mobile fixée rotativement aux biellettes 22 et 23, de sorte que son allongement permet d'augmenter la distance séparant les extrémités de chaque biellette pour placer la custode en position haute. Inversement le rétrécissement du vérin 21 permet d'abaisser la custode en partie supérieure du coffre arrière 6. Comme représenté figure 5, et de manière analogue au cas de la lunette arrière, l'articulation formée par les biellettes 22 et 23 est en dépassement de centre lorsque la custode est en position haute, de manière à garantir un positionnement stable et précis de celle-ci lorsque le toit est déployé.

## Revendications

1. Toit rigide escamotable équipant un véhicule automobile (1) comprenant un coffre arrière (6), ce toit incluant un pavillon (4, 5) couvrant l'habitacle et une lunette arrière (7) inclinée, ce toit pouvant être escamoté en partie supérieure du coffre arrière (6) pour découvrir l'habitacle, la lunette arrière (7) étant alors escamotée horizontalement dans le coffre arrière (6) **caractérisé en ce que** la lunette arrière (7) inclinée couvre le coffre arrière (6) en prolongeant le pavillon (4, 5) jusqu'à un bord supérieur arrière (9) du coffre arrière (6) lorsque le toit est déployé, et **en ce que**, lorsque la lunette arrière (7) est dans sa position escamotée horizontalement dans le coffre, la partie supérieure du coffre arrière (6) est alors fermée par un couvercle formé par tout ou partie du pavillon (4, 5).

2. Toit escamotable selon la revendication 1, dans lequel la lunette arrière (7) est montée pivotante par rapport au bord supérieur arrière (9) du coffre arrière (6).

3. Toit escamotable selon la revendication 2, comprenant une articulation à dépassement de centre incluant deux biellettes (11, 12) articulées l'une par rapport à l'autre, cette articulation reliant un point d'ancrage fixe (12') du véhicule (1) à une partie avant (7') de la lunette arrière (7), et un vérin (10) coopérant avec cette articulation pour déplacer la lunette arrière (7) entre sa position inclinée et sa position horizontale, l'articulation étant en dépassement de centre lorsque la lunette arrière (7) est en position inclinée.

4. Toit escamotable selon la revendication 2 ou 3, comprenant deux custodes (13) situées sensiblement verticalement de part et d'autre de la lunette arrière, chaque custode (13) comprenant deux rails (16, 17) recevant respectivement deux galets ou patins glissants (14, 15) solidaires du pavillon (4, 5), le pavillon (4, 5) étant guidé par ces rails pendant que le toit est escamoté.

5. Toit escamotable selon l'une des revendications 1 à 4, dans lequel le pavillon comprend un demi-pavillon avant (4) et un demi-pavillon arrière (5) disposés dans le prolongement l'un de l'autre lorsque le toit est déployé, et disposés l'un au dessus de l'autre lorsque le toit est escamoté, le couvercle du coffre arrière étant formé par l'un de ces demi-pavillons lorsque le toit est escamoté.

6. Toit escamotable selon la revendication 5, comprenant un parallélogramme déformable incluant deux biellettes (18, 19) reliant le demi-pavillon (4) avant au demi-pavillon arrière (5), l'une de ces biellettes (18) étant prolongée par un galet ou un patin glissant (18') qui coulisse dans un rail (20) sensiblement vertical pour faire pivoter le parallélogramme déformable lorsque le toit s'escamote afin de faire passer le demi-pavillon avant (4) par dessus le demi-pavillon arrière (5).

7. Toit escamotable selon la revendication 4, dans lequel les custodes (13) sont montées rotatives par rapport à un bord supérieur arrière (9) du coffre arrière (6), chaque custode occupant une position haute lorsque le toit est déployé et pouvant être abaissée dans le coffre arrière (6) lorsque le toit est escamoté.

8. Toit escamotable selon la revendication 7, comprenant une articulation à dépassement de centre incluant deux biellettes (22, 23) articulées l'une par rapport à l'autre, cette articulation reliant un point d'ancrage fixe ( 23') du véhicule (1) à une partie avant d'une custode (13) ; et un vérin (21) coopérant avec cette articulation pour déplacer cette custode (13) entre sa position haute et sa position basse, l'articulation étant en dépassement de centre lorsque la custode (13) est en position haute.

## Claims

1. Retractable hardtop fitted to a motor vehicle (1) comprising a rear boot (6), this hardtop incorporating a roof (4, 5) covering the passenger compartment and a sloping rear window (7), this hardtop being retractable to the upper part of the rear boot (6) to uncover the passenger compartment, the rear window (7) then being retracted horizontally into the rear boot (6), said hardtop being **characterized in that** the sloping rear window (7) covers the rear boot (6) in the form of a continuation of the roof (4, 5) as far as a rear upper edge (9) of the rear boot (6) when the hardtop is extended, and **in that**, when the rear window (7) is in its horizontally retracted position inside the boot, the upper part of the rear boot (6) is closed by a lid formed by all or part of the roof (4, 5).

2. Retractable hardtop according to Claim 1, in which the rear window (7) pivots on the rear upper edge (9) of the rear boot (6).

3. Retractable hardtop according to Claim 2, comprising a through-the-centre joint incorporating two links (11, 12) hinged together, this joint connecting a fixed anchor point (12') on the vehicle (1) to a forward part (7') of the rear window (7), and an actuator (10) acting on this joint to move the rear window (7) between its sloping position and its horizontal position, the joint being past the centre when the rear window (7) is in the sloping position.

4. Retractable hardtop according to Claim 2 or 3, comprising two rear side panels (13) situated approximately vertically on each side of the rear window, each rear side panel (13) comprising two rails (16, 17) accommodating two respective rollers or sliding shoes (14, 15) connected to the roof (4, 5), and the roof (4, 5) being guided by these rails during the retraction of the hardtop.

5. Retractable hardtop according to one of Claims 1 to 4, in which the roof comprises a front half-roof (4) and a rear half-roof (5), each continuing on from the other when the roof is extended, and one being above the other when the hardtop is retracted, the rear boot lid being formed by one of these half-roofs when the hardtop is retracted.

6. Retractable hardtop according to Claim 5, comprising a deformable parallelogram incorporating two links (18, 19) connecting the front half-roof (4) to the rear half-roof (5), one of these links (18) being continued by a roller or a sliding shoe (18') that slides in an approximately vertical rail (20) to pivot the deformable parallelogram when the hardtop is retracting in order to pass the front half-roof (4) over the rear half-roof (5).

7. Retractable hardtop according to Claim 4, in which the rear side panels (13) rotate about a rear upper edge (9) of the rear boot (6), each rear side panel occupying a high position when the hardtop is extended and being capable of being lowered into the rear boot (6) when the hardtop is retracted.

8. Retractable hardtop according to Claim 7, comprising a through-the-centre joint incorporating two links (22, 23) hinged together, this joint connecting a fixed anchor point (23') of the vehicle (1) to a forward part of a rear side panel (13); and an actuator (21) acting on this joint to move this rear side panel (13) between its high position and its low position, the joint being past the centre when the rear side panel (13) is in the high position.

## Patentansprüche

1. Klappbares Hardtop, das an einem Kraftfahrzeug (1) mit einem Kofferraum (6) vorgesehen ist, wobei dieses Hardtop ein Dach (4, 5), das den Innenraum bedeckt, und ein geneigtes Heckfenster (7) enthält, wobei dieses Hardtop in den oberen Teil des Kofferraums (6) eingeklappt werden kann, um den Innenraum freizulegen, wobei das Heckfenster (7) dann horizontal in den Kofferraum (6) geklappt ist, **dadurch gekennzeichnet, dass** das geneigte Heckfenster (7) den Kofferraum (6) bedeckt, indem es das Dach (4, 5) bis zum oberen hinteren Rand (9) des Kofferraums (6) verlängert, wenn das Hardtop ausgeklappt ist, und dass, wenn sich das Heckfenster (7) in seiner horizontal in den Kofferraum geklappten Position befindet, der obere Teil des Kofferraums (6) dann durch eine Abdeckung geschlossen wird, die durch das ganze Dach (4, 5) oder einen Teil davon gebildet wird.

2. Klappbares Hardtop nach Anspruch 1, bei dem das Heckfenster (7) bezüglich des oberen hinteren Rands (9) des Kofferraums (6) schwenkbar angebracht ist.

3. Klappbares Hardtop nach Anspruch 2, das ein Übertotpunktgelenk mit zwei Schwingen (11, 12) aufweist, die bezüglich einander angelenkt sind, wobei dieses Gelenk einen festgelegten Verankerungspunkt (12') des Fahrzeugs (1) mit einem Vorderteil (7') des Heckfensters (7) verbindet, und einen Zylinder (10) umfasst, der mit diesen Gelenk zusammenwirkt, um das Heckfenster (7) zwischen seiner geneigten Position und seiner horizontalen Position zu bewegen, wobei das Gelenk seinen Totpunkt überschritten hat, wenn sich das Heckfenster (7) in der geneigten Position befindet.

4. Klappbares Hardtop nach Anspruch 2 oder 3, das zwei Heckseitenwände (13) aufweist, die sich im Wesentlichen vertikal auf beiden Seiten des Heckfensters befinden, wobei jede Heckseitenwand (13) zwei Schienen (16, 17) aufweist, die jeweils zwei Rollen oder Gleitschuhe (14, 15) aufnehmen, welche fest mit dem Dach (4, 5) verbunden sind, wobei das Dach (4, 5) durch diese Schienen während des Einklappens des Hardtops geführt wird.

5. Klappbares Hardtop nach einem der Ansprüche 1 bis 4, bei dem das Dach eine vordere Dachhälfte (4) und eine hintere Dachhälfte (5) umfasst, die in ihrer gegenseitigen Verlängerung angeordnet sind, wenn das Hardtop ausgeklappt ist, und übereinander angeordnet sind, wenn das Hardtop eingeklappt ist, wobei die Abdeckung des Kofferraums durch eine der Dachhälften gebildet wird, wenn das Hardtop eingeklappt ist.

6. Klappbares Hardtop nach Anspruch 5, mit einem verformbaren Parallelogramm, das zwei Schwingen (18, 19) enthält, die die vordere Dachhälfte (4) mit der hinteren Dachhälfte (5) verbinden, wobei eine dieser Schwingen (18) durch eine Rolle oder einen Gleitschuh (18') verlängert wird, die bzw. der in einer im Wesentlichen vertikalen Schiene (20) gleitet, um das verformbare Parallelogramm zu schwenken, wenn das Hardtop eingeklappt wird, um die vordere Dachhälfte (4) über die hintere Dachhälfte (5) zu passieren.

7. Klappbares Hardtop nach Anspruch 4, bei dem die Heckseitenwände (13) bezüglich eines oberen hinteren Rands (9) des Kofferraums (6) drehbar angebracht sind, wobei jede Heckseitenwand eine obere Position einnimmt, wenn das Hardtop ausgeklappt ist, und in den Kofferraum (6) abgesenkt werden kann, wenn das Hardtop eingeklappt ist.

8. Klappbares Hardtop nach Anspruch 7, das ein Übertotpunktgelenk mit zwei Schwingen (22, 23) aufweist, die bezüglich einander angelenkt sind, wobei dieses Gelenk einen festgelegten Verankerungspunkt (23') des Fahrzeugs (1) mit einem Vorderteil einer Heckseitenwand (13) verbindet, und einem Zylinder (21), der mit diesem Gelenk zusammenwirkt, um diese Heckseitenwand (13) zwischen ihrer oberen Position und ihrer unteren Position zu bewegen, wobei das Gelenk seinen Totpunkt überschritten hat, wenn sich die Heckseitenwand (13) in der oberen Position befindet.
